# EUROPEAN PATENT APPLICATION

(11) **EP 4 656 690 A1**
(43) Date of publication of application: **03.12.2025**
(21) Application number: 24747249.1
(22) Date of filing: 22.01.2024
(51) Int. Cl.: C09D 5/16, C09D 133/04, C09D 133/14

(54) **ANTIFOULING COATING COMPOSITION**

(30) Priority: 26.01.2023 JP 2023010400
(71) Applicant: Nitto Kasei Co., Ltd., Osaka-shi Osaka 533-0031 (JP)
(72) Inventor: HAMAURA, Nobuyuki, Osaka-shi, Osaka 533-0031 (JP); KITAMURA, Hitoshi, Osaka-shi, Osaka 533-0031 (JP); OKA, Nagato, Osaka-shi, Osaka 533-0031 (JP); MATSUKI, Takashi, Osaka-shi, Osaka 533-0031 (JP); WAKU, Hidenori, Osaka-shi, Osaka 533-0031 (JP); YASUI, Takuya, Osaka-shi, Osaka 533-0031 (JP)
(74) Representative: Gulde & Partner
(86) International application number: PCT/JP2024/001612
(87) International publication number: WO 2024/157921

(57) **Abstract**

The present invention aims to provide an antifouling coating composition capable of maintaining a stable coating film dissolution rate in low-temperature seawater over a long period of time, and capable of maintaining stable antifouling performance.

According to the present invention, provided is an antifouling coating composition, comprising a copolymer A and an antifouling agent D, in which: the copolymer A is a copolymer of a monomer (a) represented by general formula (1) and an ethylenically unsaturated monomer (b) other than the monomer (a); the monomer (a) comprises a compound represented by general formula (1) in which n is 2 or more; the monomer (b) comprises a monomer (b1) represented by general formula (2); and a proportion of the monomer (b1) with respect to a total of the monomer (a) and the monomer (b) is 0.01 to 2 mol%.

## Description

### Technical Field

The present invention relates to an antifouling coating composition.

### Background Art

Aquatic fouling organisms such as barnacles, tubeworms, common mussels, Bugula neritina, sea squirts, green laver, sea lettuce, and slimes adhere to ships (especially, on the bottom of ships), fishing tools such as fishing nets and fishing net accessories, and underwater structures such as power plant aqueducts, thereby causing problems such as impaired functionality and appearance of the ships and the like.

In order to prevent such problems, there are known techniques in which an antifouling coating composition is applied onto a ship or the like to form an antifouling coating film such that an antifouling agent is gradually released from the antifouling coating film, which allows antifouling performance to be exhibited over a long period of time (Patent Literatures 1 to 4).

However, the antifouling coating films comprising (meth)acrylic acid alkoxycarbonylmethyl ester group-containing polymer disclosed in Patent Literatures 1 to 4 are difficult to exhibit antifouling property over a long period of time due to its extremely low coating film dissolubility. In order to solve these problems, there has been proposed a technique for dissolving and allowing the coating film to exhibit antifouling performance over a long period of time (Patent Literature 5). Further, a technique showing improvements in terms of coating film physical properties, such as cracking and peeling, has also been proposed (Patent Literature 6).

### Citation List

### Patent Literature

[Patent Literature 1] JP-B-Sho63-61989
[Patent Literature 2] JP-A-2003-119420
[Patent Literature 3] JP-A-2003-119419
[Patent Literature 4] JP-A-2002-3776
[Patent Literature 5] WO2020/045211
[Patent Literature 6] WO2022/102492

### Summary of Invention

### Technical Problem

Although the antifouling coating films comprising the antifouling coating compositions disclosed in Patent Literatures 5 and 6 have shown improvements in terms of coating film dissolubility, coating film physical properties and the like, there remains room for improvement in the coating film dissolubility in low-temperature sea areas (e.g., 15°C or below). Consequently, there has been a desire for an antifouling coating composition capable of maintaining excellent antifouling performance over a long period of time, even in low-temperature sea areas.

The present invention has been made in view of such circumstances, and aims to provide an antifouling coating composition capable of maintaining a stable coating film dissolution rate in low-temperature seawater over a long period of time, and capable of maintaining stable antifouling performance.

### Solution to Problem

According to the present invention, provided is an antifouling coating composition, comprising a copolymer A and an antifouling agent D, wherein: the copolymer A is a copolymer of a monomer (a) represented by general formula (1) and an ethylenically unsaturated monomer (b) other than the monomer (a); the monomer (a) comprises a compound represented by general formula (1) in which n is 2 or more; the monomer (b) comprises a monomer (b1) represented by general formula (2); and a proportion of the monomer (b1) with respect to a total of the monomer (a) and the monomer (b) is 0.01 to 2 mol%.

As a result of diligent research to solve the above problems, the present inventors have found that the composition comprising the copolymer A and the antifouling agent D can solve the above problems, leading to the completion of the present invention.

### Description of Embodiments

Hereinafter, the present invention will be described in detail. In the present specification, "(meth)acrylic acid ester" means an acrylic acid ester or a methacrylic acid ester, and "(meth)acrylic acid" means acrylic acid or methacrylic acid. 1. Antifouling Coating Composition

The antifouling coating composition of the present invention contains a copolymer A and an antifouling agent D.

### 1-1. Copolymer A

The copolymer A is a copolymer of a monomer (a) and an ethylenically unsaturated monomer (b) other than the monomer (a).

The content of the monomer (a) with respect to the total of the monomer (a) and the monomer (b) is preferably 10 to 90 mass%, and more preferably 20 to 70 mass%. Specifically, the content is, for example, 10, 15, 20, 25, 30, 35, 40, 45, 50, 55, 60, 65, 70, 75, 80, 85, or 90 mass%, and may be within the range between any two numerical values exemplified herein. In this case, the coating film dissolubility is particularly good.

The content of the monomer (b1) accounts for 0.01 to 2 mol%, more preferably 0.1 to 1 mol%, based on the total moles of the monomer (a) and the monomer (b). Specifically, the content is, for example, 0.01, 0.05, 0.1, 0.5, 1.0, 1.5, or 2.0 mol%, and may be within the range between any two numerical values exemplified herein.

### 1-1-1. Monomer (a)

The monomer (a) is represented by general formula (1). 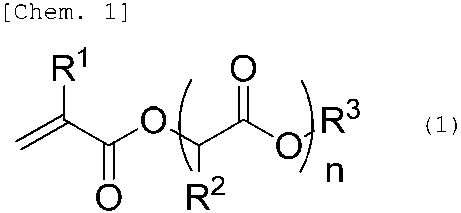 (In general formula (1), R¹ represents hydrogen or a methyl group; R² represents hydrogen, a methyl group or a phenyl group; R³ represents an alkyl group having 1 to 8 carbon atoms optionally substituted with an alkoxy group having 1 to 8 carbon atoms or a phenyl group, or represents a phenyl group; and n represents an integer of 1 to 10.)

R² is preferably hydrogen or a methyl group.

The alkyl group of R³ having 1 to 8 carbon atoms may be substituted with a substituent or unsubstituted. The substituent may be an alkoxy group having 1 to 8 carbon atoms or a phenyl group. The number of carbon atoms in the alkoxy group or alkyl group of R³ is, for example, 1, 2, 3, 4, 5, 6, 7, or 8, and may be within the range between any two numerical values exemplified herein. The alkyl group of R³ is, for example, a methyl group, an ethyl group, a n-propyl group, an isopropyl group, a n-butyl group, a t-butyl group, a 2-ethylhexyl group, a cyclohexyl group, a benzyl group, a phenyl group, a 2-methoxyethyl group, a 4-methoxybutyl group, a vinyl group, or an allyl group, and is preferably a methyl group, an ethyl group, an isopropyl group, or a n-butyl group.

Here, n represents an integer of 1 to 10. For example, n is 1, 2, 3, 4, 5, 6, 7, 8, 9, or 10, and may be within the range between any two numerical values exemplified herein.

The monomer (a) comprises a compound represented by general formula (1) in which n is 2 or more. When the compound in which n is 2 or more is contained as the monomer (a), the coating film dissolubility is enhanced. The monomer (a) may only be constituted by a compound in which n is 2 or more, or may be a mixture of a compound in which n is 1 and a compound in which n is 2 or more.

The monomer (a) is preferably constituted by a monomer (a1) and a monomer (a2). The content of the monomer (a1) in the monomer (a) is preferably 50 to 80 mass%, more preferably 55 to 75 mass%, and even more preferably 60 to 70 mass%. The monomer (a1) has the property of increasing the coating film strength and decreasing the coating film dissolubility as compared with the monomer (a2). Therefore, when the content of the monomer (a1) is too small, the coating film strength tends to decrease, and the coating film surface condition may deteriorate after a long period of time. On the other hand, when the content of the monomer (a1) is too large, the coating film dissolubility may decrease, which may deteriorate the antifouling performance.

### <Monomer (a1)>

The monomer (a1) is a compound represented by general formula (1) in which n is 1.

Examples of the monomer (a1) include methoxycarbonylmethyl (meth)acrylate, ethoxycarbonylmethyl (meth)acrylate, isopropoxycarbonylmethyl (meth)acrylate, n-propoxycarbonylmethyl (meth)acrylate, n-butoxycarbonylmethyl (meth)acrylate, t-butoxycarbonylmethyl (meth)acrylate, 2-ethylhexyloxycarbonylmethyl (meth)acrylate, cyclohexyloxycarbonylmethyl (meth)acrylate, benzyloxycarbonylmethyl (meth)acrylate, phenoxycarbonylmethyl (meth)acrylate, 2-methoxyethoxycarbonylmethyl (meth)acrylate, 4-methoxybutoxycarbonylmethyl (meth)acrylate, allyloxycarbonylmethyl (meth)acrylate, vinyloxycarbonylmethyl (meth)acrylate, 1-(methoxycarbonyl)ethyl (meth)acrylate, 1-(ethoxycarbonyl)ethyl (meth)acrylate, 1-(n-propoxycarbonyl)ethyl (meth)acrylate, 1-(isopropoxycarbonyl)ethyl (meth)acrylate, 1-(n-butoxycarbonyl)ethyl (meth)acrylate, 1-(t-butoxycarbonyl)ethyl (meth)acrylate,α-(methoxycarbonyl)benzyl (meth)acrylate, and α-(ethoxycarbonyl)benzyl (meth)acrylate, and preferred examples thereof include methoxycarbonylmethyl (meth)acrylate, ethoxycarbonylmethyl (meth)acrylate, isopropoxycarbonylmethyl (meth)acrylate, n-propoxycarbonylmethyl (meth)acrylate, n-butoxycarbonylmethyl (meth)acrylate, 1-(methoxycarbonyl)ethyl (meth)acrylate, and 1-(ethoxycarbonyl)ethyl (meth)acrylate.

### <Monomer (a2)>

The monomer (a2) is a compound represented by general formula (1) in which n is 2 or more. Preferably, n in general formula (1) is 2 to 6 in terms of long-term antifouling property.

The monomer (a2) preferably contains both a compound in which n is 2 and a compound in which n is 3 or more. Specifically, the mass ratio (n(2)/n(2 to 10)) in terms of solid content is preferably, for example, 0.4 to 0.8, and more preferably 0.5 to 0.7. In this case, stable dissolution of the coating film tends to continue. Specifically, this value is, for example, 0.40, 0.45, 0.50, 0.55, 0.60, 0.65, 0.70, 0.75, or 0.80, and may be within the range between any two numerical values exemplified herein.

Examples of the monomer (a2) include di(oxycarbonylmethyl) methyl (meth)acrylate, di(oxycarbonylmethyl) ethyl (meth)acrylate, di(oxycarbonylmethyl) isopropyl (meth)acrylate, di(oxycarbonylmethyl) n-propyl (meth)acrylate, di(oxycarbonylmethyl) n-butyl (meth)acrylate, di(oxycarbonylmethyl) t-butyl (meth)acrylate, di(oxycarbonylmethyl) 2-ethylhexyl (meth)acrylate, di(oxycarbonylmethyl) cyclohexyl (meth)acrylate, di(oxycarbonylmethyl) benzyl (meth)acrylate, di(oxycarbonylmethyl) phenyl (meth)acrylate, di(oxycarbonylmethyl) 2-methoxyethyl (meth)acrylate, di(oxycarbonylmethyl) 4-methoxybutyl (meth)acrylate, di(oxycarbonylmethyl) allyl (meth)acrylate, di(oxycarbonylmethyl) vinyl (meth)acrylate, di[1-(oxypolycarbonyl)ethyl] methyl (meth)acrylate, di[1-(oxypolycarbonyl)ethyl] ethyl (meth)acrylate, di[1-(oxypolycarbonyl)ethyl] n-propyl (meth)acrylate, di[1-(oxypolycarbonyl)ethyl] isopropyl (meth)acrylate, di[1-(oxypolycarbonyl)ethyl] n-butyl (meth)acrylate, di[1-(oxypolycarbonyl)ethyl] t-butyl (meth)acrylate, di[α-(oxycarbonyl)benzyl] methyl (meth)acrylate, and di[α-(oxycarbonyl)benzyl] ethyl (meth)acrylate, preferred examples thereof include di(oxycarbonylmethyl) methyl (meth)acrylate, di(oxycarbonylmethyl) ethyl (meth)acrylate, di(oxycarbonylmethyl) isopropyl (meth)acrylate, di(oxycarbonylmethyl) n-propyl (meth)acrylate, di(oxycarbonylmethyl) n-butyl (meth)acrylate, di[1-(oxypolycarbonylethyl)] methyl (meth)acrylate, di[1-(oxypolycarbonylethyl)] ethyl (meth)acrylate, poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly(oxycarbonylmethyl) t-butyl (meth)acrylate, poly(oxycarbonylmethyl) 2-ethylhexyl (meth)acrylate, poly(oxycarbonylmethyl) cyclohexyl (meth)acrylate, poly(oxycarbonylmethyl) benzyl (meth)acrylate, poly(oxycarbonylmethyl) phenyl (meth)acrylate, poly(oxycarbonylmethyl) 2-methoxyethyl (meth)acrylate, poly(oxycarbonylmethyl) 4-methoxybutyl (meth)acrylate, poly(oxycarbonylmethyl) allyl (meth)acrylate, poly(oxycarbonylmethyl) vinyl (meth)acrylate, poly[1-(oxypolycarbonyl)ethyl] methyl (meth)acrylate, poly[1-(oxypolycarbonyl)ethyl] ethyl (meth)acrylate, poly[1-(oxypolycarbonyl)ethyl] n-propyl (meth)acrylate, poly[1-(oxypolycarbonyl)ethyl] isopropyl (meth)acrylate, poly[1-(oxypolycarbonyl)ethyl] n-butyl (meth)acrylate, poly[1-(oxypolycarbonyl)ethyl] t-butyl (meth)acrylate, poly[α-(oxycarbonyl)benzyl] methyl (meth)acrylate, and poly[α-(oxycarbonyl)benzyl] ethyl (meth)acrylate, and preferred examples thereof include poly(oxycarbonylmethyl) methyl (meth)acrylate, poly(oxycarbonylmethyl) ethyl (meth)acrylate, poly(oxycarbonylmethyl) isopropyl (meth)acrylate, poly(oxycarbonylmethyl) n-propyl (meth)acrylate, poly(oxycarbonylmethyl) n-butyl (meth)acrylate, poly[1-(oxypolycarbonylethyl)] methyl (meth)acrylate, and poly[1-(oxypolycarbonylethyl)] ethyl (meth)acrylate.

### 1-1-2. Monomer (b)

The monomer (b) is an ethylenically unsaturated monomer other than the monomer (a). The monomer (b) can be classified into a monomer (b1) and a monomer (b2), and the monomer (b) used in the polymerization of the copolymer A includes at least the monomer (b1) .

The proportion of the monomer (b1) with respect to the total of the monomer (a) and the monomer (b) is 0.01 to 2 mol%, and preferably 0.1 to 1.5 mol%. Specifically, this proportion is, for example, 0.01, 0.05, 0.1, 0.2, 0.3, 0.4, 0.5, 0.6, 0.7, 0.8, 0.9, 1.0, 1.5, or 2.0 mol%, and may be within the range between any two numerical values exemplified herein.

### <Monomer (b1)>

The monomer (b1) is one or more kinds of compounds selected from the compounds represented by general formula (2). 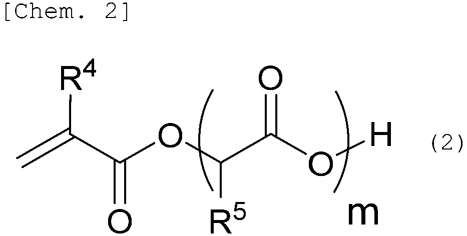 (In general formula (2), R⁴ is hydrogen or a methyl group, R⁵ represents hydrogen, a methyl group, or a phenyl group, and m represents an integer of 0 to 10.)

R⁴ is preferably hydrogen. m is preferably 0 or 1, and more preferably 0. Specifically, m is, for example, 0, 1, 2, 3, 4, 5, 6, 7, 8, 9, or 10, and may be within the range between any two numerical values exemplified herein.

Examples of the monomer (b1) include (meth)acrylic acid and hydroxycarbonylmethyl (meth)acrylate.

### <Monomer (b2)>

The monomer (b2) is the monomer (b) excluding the monomer (b1). In other words, the monomer (b2) is a monomer not represented by any of general formulas (1) to (2). Examples of the monomer (b2) include (meth)acrylic acid esters, vinyl compounds, aromatic compounds and dialkyl ester compounds of dibasic acid, which are not represented by general formulas (1) to (2).

Examples of the (meth)acrylic acid ester which is the monomer (b2) include (meth)acrylic acid esters such as methyl methacrylate, ethyl acrylate, ethyl methacrylate, butyl acrylate, butyl methacrylate, isobutyl acrylate, isobutyl methacrylate, t-butyl acrylate, t-butyl methacrylate, 2-ethylhexyl acrylate, 2-ethylhexyl methacrylate, lauryl acrylate, lauryl methacrylate, benzyl acrylate, benzyl methacrylate, phenyl acrylate, and cyclic trimethylolpropane formal acrylate; and (meth)acrylic acid silyl esters such as triisopropylsilyl acrylate and triisopropylsilyl methacrylate.

Examples of the vinyl compound which is the monomer (b2) include vinyl compounds such as vinyl chloride, vinylidene chloride, vinyl benzoate, vinyl butyrate, butyl vinyl ether, and lauryl vinyl ether.

Examples of the aromatic compound which is the monomer (b2) include styrene, vinyltoluene, and α-methylstyrene.

Examples of the dialkyl ester compound of dibasic acid which is the monomer (b2) include dibutyl maleate.

### 1-1-3. Physical Properties and Production Method of Copolymer A

The weight-average molecular weight (Mw) of the copolymer A is preferably 5,000 to 300,000. When the molecular weight is less than 5,000, the coating film formed of the antifouling coating material becomes fragile and easily peels off or cracks, and when the molecular weight exceeds 300,000, the viscosity of the polymer solution increases and handling becomes difficult. Specifically, the Mw is, for example, 5,000, 10,000, 20,000, 30,000, 40,000, 50,000, 60,000, 70,000, 80,000, 90,000, 100,000, 200,000, or 300,000, and may be within the range between any two numerical values exemplified herein.

Examples of the method for measuring Mw include gel permeation chromatography (GPC method).

The copolymer A may be a random copolymer, an alternating copolymer, a periodic copolymer, or a block copolymer of the monomer (a1), the monomer (a2), the monomer (b1), and the monomer (b2).

The copolymer A can be obtained, for example, by polymerizing the monomer (a1), the monomer (a2), the monomer (b1), and the monomer (b2) in the presence of a polymerization initiator.

Examples of the polymerization initiator include azo compounds such as 2,2'-azobisisobutyronitrile, 2,2'-azobis(2-methylbutyronitrile), 2,2'-azobis(2,4-dimethylvaleronitrile), dimethyl-2,2'-azobisisobutyrate, dimethyl-2,2'-azobisisobutyrate, and 2,2'-azobis(N-butyl-2-methylpropionamide); peroxides such as benzoyl peroxide, di-tert-butyl peroxide, tert-butyl peroxybenzoate, tert-butyl peroxyisopropyl carbonate, t-butyl peroxy-2-ethylhexanoate, t-hexylperoxy-2-ethylhexanoate, di-t-hexyl peroxide, t-butylperoxy-2-ethylhexyl monocarbonate, di-t-butyl peroxide, 1,1,3,3-tetramethylbutylperoxyneodecanoate, t-amylperoxyneodecanoate, t-hexylperoxypivalate, t-amylperoxypivalate, and 1,1,3,3-tetramethylbutylperoxy-2-ethylhexanoate. These polymerization initiators may be used singly, or two or more thereof may be used in combination. Particularly preferred as the polymerization initiator are 2,2'-azobisisobutyronitrile, 2,2'-azobis(2-methylbutyronitrile), 2,2'-azobis(2,4-dimethylvaleronitrile), dimethyl 2,2'-azobisisobutyrate, and 1,1,3,3-tetramethylbutylperoxy-2-ethylhexanoate. The amount of the polymerization initiator used can be set as appropriate to adjust the molecular weight of the copolymer A. A chain transfer agent can also be used to adjust the molecular weight of the resulting polymer. Examples of the chain transfer agent include mercaptans such as n-dodecylmercaptan; thioglycolic acid esters such as octyl thioglycolate; and α-methylstyrene dimer and terpinolene.

Examples of the polymerization method include solution polymerization, bulk polymerization, emulsion polymerization, suspension polymerization, and non-aqueous dispersion polymerization. Among these, solution polymerization or non-aqueous dispersion polymerization is particularly preferred in that the copolymer A simply and accurately can be obtained therethrough.

In the polymerization reaction, an organic solvent may be used as necessary. Examples of the organic solvent include, but are not limited to, aromatic hydrocarbon solvents such as xylene and toluene; aliphatic hydrocarbon solvents; ester solvents such as ethyl acetate, butyl acetate, isobutyl acetate, methoxy propyl acetate, and propylene glycol 1-monomethyl ether 2-acetate; alcohol solvents such as isopropyl alcohol, butyl alcohol, and propylene glycol monomethyl ether; ether solvents such as dioxane, diethyl ether, and dibutyl ether; and ketone solvents such as methyl ethyl ketone and methyl isobutyl ketone.

Among these, preferred are butyl acetate, isobutyl acetate, butyl alcohol, propylene glycol monomethyl ether, propylene glycol 1-monomethyl ether 2-acetate, toluene, and xylene. These solvents may be used singly, or two or more thereof may be used in combination.

The reaction temperature in the polymerization reaction may be set as appropriate according to the type of the polymerization initiator and the like, and is usually 50 to 160°C, preferably 60 to 150°C.

The polymerization reaction is preferably carried out under an inert gas atmosphere such as nitrogen gas or argon gas.

### 1-2. Antifouling Agent D

Examples of the antifouling agent include inorganic agents and organic agents.

Examples of inorganic chemicals include cuprous oxide, copper thiocyanate (generic name: copper rhodanide), and copper powder. Among these, preferred are cuprous oxide and copper rhodanide, and more preferred is cuprous oxide surface-treated with glycerin, sucrose, stearic acid, lauric acid, lecithin, mineral oil and the like in terms of long-term stability during storage.

Examples of organic agents include copper 2-mercaptopyridine-N-oxide (generic name: copper pyrithione), zinc 2-mercaptopyridine-N-oxide (generic name: zinc pyrithione), zinc ethylene-bis-dithiocarbamate (generic name: Zineb), 4,5-dichloro-2-n-octyl-3-isothiazolone (generic name: SEA-NINE 211), 3,4-dichlorophenyl-N,-N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethylpyrrole (generic name: Econea 28), and 4-[1-(2,3-dimethylphenyl)ethyl]-1H-imidazole (generic name: medetomidine).

These antifouling agents can be used alone, or two or more of these can be used in combination.

The content of the antifouling agent in the composition of the present invention is not particularly limited, but is usually 0.1 to 60.0 mass%, in terms of solid content. The content of the antifouling agent is, for example, 0.1, 0.5, 1, 2, 3, 4, 5, 6, 7, 8, 9, 10, 15, 20, 25, 30, 35, 40, 45, 50, 55, or 60 mass%, and may be within the range between any two numerical values exemplified herein.

### 1-3. Other Additives

If necessary, a resin component other than the copolymer A, a release modifier, a plasticizer, a pigment, a dye, an antifoaming agent, a dehydrating agent, a thixotropic agent, an organic solvent, or the like can be further added to the resin for the antifouling coating material of the present invention to obtain the antifouling coating material.

Examples of the release modifier include rosin, rosin derivative, monocarboxylic acid and salts thereof, such as naphthenic acid, cycloalkenyl carboxylic acid, bicycloalkenyl carboxylic acid, versatic acid, trimethyl isobutenyl cyclohexene carboxylic acid, and metal salts thereof, and alicyclic hydrocarbon resins described above. These may be used singly or in combination of two or more thereof.

Examples of the rosin derivative include hydrogenated rosin, disproportionated rosin, maleated rosin, formylated rosin, and polymerized rosin.

Examples of the alicyclic hydrocarbon resin include commercially available products such as Quintone 1500, 1525L, and 1700 (product names, manufactured by ZEON CORPORATION).

Among these, preferred are rosin, rosin derivatives, naphthenic acid, versatic acid, trimethylisobutenylcyclohexenecarboxylic acid, and metal salts thereof.

Examples of the dehydrating agent include calcium sulfate, synthetic zeolite adsorbents, orthoesters, silicates such as tetramethoxysilane and tetraethoxysilane, isocyanates, carbodiimides, and carbodiimidazoles. These may be used singly, or two or more thereof may be used in combination.

### 2. Method for Producing Antifouling Coating Composition

The antifouling coating composition of the present invention may be produced, for example, by mixing and dispersing a mixed solution containing the copolymer A, the antifouling agent D, other additives, and the like using a disperser.

The mixed solution is preferably prepared by dissolving or dispersing various materials such as the copolymer A and the antifouling agent D in a solvent.

A disperser that may be used as a fine pulverizer may be suitably used, for example, as the disperser. For example, commercially available homomixers, sand mills, bead mills, dispersers, or the like may be used. Alternatively, glass beads or the like for mixing and dispersing may be charged into a container equipped with a stirrer and used for mixing and dispersing the mixed solution.

### 3. Method for Antifouling Treatment, Antifouling Coating Film, and Coated Article

In the antifouling treatment method of the present invention, an antifouling coating film is formed on the surface of an object to be coated with the above antifouling coating composition. According to the antifouling treatment method of the present invention, the antifouling coating film gradually dissolves from the surface and the coating film surface is constantly renewed, thereby preventing adhesion of aquatic fouling organisms.

Examples of the object to be coated include ships (in particular, ship bottoms), fishing tools, and underwater structures.

The thickness of the antifouling coating film may be set as appropriate according to the type of object to be coated, sailing speed of the ship, seawater temperature, and the like. For example, in a case where the object to be coated is the bottom of a ship, the thickness of the antifouling coating film is usually 50 to 700 µm, and preferably 100 to 600 µm.

### Examples

The features of the present invention will be further clarified by Examples and the like to be described below. The present invention, however, is not limited to these Examples and the like.

The weight-average molecular weight (Mw) is a value obtained by GPC (polystyrene equivalent). The conditions for GPC were as follows.
Equipment: HLC-8220GPC manufactured by Tosoh Corporation
Column: TSKgel SuperHZM-M × 2
Flow rate: 0.35 mL/min
Detector: RI
Column thermostatic bath temperature: 40°C
Eluent: THF

The non-volatile matter is a value measured in accordance with JIS K 5601-1-2:1999 (ISO 3251:1993) "Testing Methods for Paint Components: Determination of Non-Volatile matter".

### 1. Production Example

### 1-1. Production Example of Monomer (a1)

### <Production Example 1 (Production of Monomer a1-1)>

Into a four-necked flask equipped with a thermometer, a condenser, a stirrer, and a dropping funnel, 109 g (1.00 mol) of methyl chloroacetate, 72 g (1.00 mol) of acrylic acid, 0.1 g of 4-methoxyphenol, and 500 g of ethyl acetate were charged, and 101 g (1.00 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and the solvent was removed by concentration under reduced pressure to give 129.7 g of a monomer a1-1.

### <Production Examples 2 to 3 (Production of Monomers a1-2 to a1-3)>

Monomers a1-2 to a1-3 were obtained by performing reactions in the same manner as in Production Example 1 using the raw materials shown in Table 1. The reaction conditions and yields of Production Examples 1 to 3 are shown in Table 1.

**[Table 1]**

| Table 1 | | | | | | Raw Material (g) | | | | | | | Yield |
|---|---|---|---|---|---|---|---|---|---|---|---|---|---|
| Production Example | Monomer | R1 | R2 | R3 | n | CAMe | CAEt | AA | MAA | TEA | Ethyl Acetate | MEHQ | (g) |
| 1 | a1-1 | H | H | Me | 1 | 109 | | 72 | | 101 | 500 | 0.1 | 129.7 |
| 2 | a1-2 | H | H | Et | 1 | | 123 | 72 | | 101 | 500 | 0.1 | 142.3 |
| 3 | a1-3 | Me | H | Et | 1 | | 123 | | 86 | 101 | 500 | 0.1 | 155.0 |

### 1-2. Production Example of Monomer (a2)

### <Production Example 4 (Production of Monomer a2-1)>

### (First Reaction)

Into a four-necked flask equipped with a thermometer, a condenser, and a stirrer, 215 g (1.85 mol) of sodium monochloroacetate, 201 g (1.85 mol) of methyl chloroacetate, and 300 g of N-methyl-2-pyrrolidone were charged, and the mixture was stirred at 70 to 80°C for 6 hours. After completion of the reaction, 500 ml of toluene was added to the reaction solution, and the organic layer was washed with city water, hydrochloric acid water, and sodium bicarbonate water in this order, and then the solvent was removed by concentration under reduced pressure to give 262 g of methoxycarbonyl methyl chloroacetate.

### (Second Reaction)

Subsequently, into a four-necked flask equipped with a thermometer, a condenser, a stirrer, and a dropping funnel, 200 g (1.20 mol) of methoxycarbonyl methyl chloroacetate, which is the product of the first reaction, 87 g (1.20 mol) of acrylic acid, 0.1 g of 4-methoxyphenol, and 500 g of ethyl acetate were charged, and 122 g (1.20 mol) of triethylamine was added dropwise to the mixture with stirring while maintaining the temperature at 40°C or lower. After completion of the dropwise addition, the mixture was stirred at 70 to 80°C for 6 hours. After completion of the reaction, the organic layer was washed with city water, hydrochloric acid water, and sodium bicarbonate water in this order, and the solvent was removed by concentration under reduced pressure to give 230.6 g of a monomer a2-1.

### <Production Examples 5 to 18 (Production of Monomers a2-2 to a2-15)>

Monomers a2-2 to a2-15 shown in Table 2 were obtained by performing reactions in the same manner as in Production Example 4 using the raw materials shown in Table 2. The reaction conditions and yields of Production Examples 4 to 18 are shown in Table 2.

### [Table 2]

| Table 2 | | | | | | First Reaction | | | | | Second Reaction | | | | | | |
|---|---|---|---|---|---|---|---|---|---|---|---|---|---|---|---|---|---|
| | | | | | | Raw Material (g) | | | | Intermediate | Raw Material (g) | | | | | | Yield |
| Production Example | Monomer | R1 | R2 | R3 | n | CANa | CAMe | CAEt | NMP | Yield (g) | Intermediate | AA | MAA | TEA | Ethyl Acetate | MEHQ | (g) |
| 4 | a2-1 | H | H | Me | 2 | 215 | 201 | | 300 | 262 | 200 | 87 | | 122 | 500 | 0.1 | 230.6 |
| 5 | a2-2 | H | H | Et | 2 | 199 | | 209 | 300 | 269 | 200 | 80 | | 112 | 500 | 0.1 | 227.5 |
| 6 | a2-3 | Me | H | Et | 2 | 199 | | 209 | 300 | 269 | 200 | | 95 | 112 | 500 | 0.1 | 227.5 |
| 7 | a2-4 | H | H | Me | 3 | 321 | 150 | | 300 | 260 | 200 | 64 | | 90 | 500 | 0.1 | 220.1 |
| 8 | a2-5 | H | H | Et | 3 | 305 | | 160 | 300 | 266 | 200 | 60 | | 85 | 500 | 0.1 | 218.3 |
| 9 | a2-6 | Me | H | Et | 3 | 305 | | 160 | 300 | 266 | 200 | | 72 | 85 | 500 | 0.1 | 218.3 |
| 10 | a2-7 | H | H | Me | 4 | 384 | 119 | | 300 | 261 | 200 | 51 | | 72 | 500 | 0.1 | 232.8 |
| 11 | a2-8 | H | H | Et | 4 | 349 | | 123 | 300 | 252 | 200 | 49 | | 68 | 500 | 0.1 | 193.6 |
| 12 | a2-9 | Me | H | Et | 4 | 349 | | 123 | 300 | 252 | 200 | | 58 | 68 | 500 | 0.1 | 193.6 |
| 13 | a2-10 | H | H | Me | 5 | 419 | 98 | | 300 | 258 | 200 | 42 | | 59 | 500 | 0.1 | 208.8 |
| 14 | a2-11 | H | H | Et | 5 | 373 | | 98 | 300 | 241 | 200 | 41 | | 57 | 500 | 0.1 | 177.0 |
| 15 | a2-12 | Me | H | Et | 5 | 382 | | 100 | 300 | 247 | 200 | | 49 | 57 | 500 | 0.1 | 177.0 |
| 16 | a2-13 | H | H | Me | 6 | 437 | 81 | | 300 | 251 | 200 | 36 | | 51 | 500 | 0.1 | 191.8 |
| 17 | a2-14 | H | H | Et | 6 | 408 | | 86 | 300 | 246 | 200 | 35 | | 49 | 500 | 0.1 | 165.0 |
| 18 | a2-15 | Me | H | Et | 6 | 408 | | 86 | 300 | 246 | 200 | | 42 | 49 | 500 | 0.1 | 165.0 |

The details of the raw materials in Tables 1 to 2 are as follows.
CAMe: methyl chloroacetate
CAEt: ethyl chloroacetate
AA: acrylic acid
MAA: methacrylic acid
TEA: triethylamine
MEHQ: 4-methoxyphenol
CANa: sodium monochloroacetate
NMP: N-methyl-2-pyrrolidone

### 1-3. Production Example of Copolymer Solution

### <Production Example P1 (Production of Copolymer Solution A-1)>

Into a four-necked flask equipped with a thermometer, a condenser, a stirrer, and a dropping funnel, 50 g of xylene and 50 g of butyl acetate were charged as solvents, nitrogen gas was introduced, and the mixture was stirred while maintaining the temperature at 88°C. Then, a mixed solution of the monomer (a1), the monomer (a2), the monomer (b1), and the monomer (b2) in the amounts (g) shown in Table 3 and 2.0 g of 1,1,3,3-tetramethylbutylperoxy-2-ethylhexanoate as a polymerization initiator (initial addition) was added dropwise over 3 hours while maintaining the temperature at 88°C. Thereafter, after stirring at 88°C for 1 hour, 0.1 g of 1,1,3,3-tetramethylbutylperoxy-2-ethylhexanoate was added 3 times every hour, and after stirring for 2 hours at the same temperature, the mixture was cooled to room temperature to obtain a copolymer solution A-1. The non-volatile matter and Mw of A-1 are shown in Table 3.

### <Production Examples P2 to P20 (Production of Copolymer Solutions A-2 to A-17 and B-1 to B-3)>

Copolymer solutions A-2 to A-17 and B-1 to B-3 were obtained by performing a polymerization reaction in the same manner as in Production Example P1 except that the monomers, polymerization initiators, and solvents shown in Tables 3 to 5 were used. The non-volatile matter and Mw of each polymer are shown in Tables 3 to 5. The unit of numerical values for the amounts of raw materials in the table is g. The proportion (mol%) of the monomer (b1) in the table was calculated by dividing the number of moles of the monomer (b1) by the total number of moles of the monomer (a) and the monomer (b).

**[Table 3]**

| Table 3 | | Production Example | | | | | | |
|---|---|---|---|---|---|---|---|---|
| | | P1 | P2 | P3 | P4 | P5 | P6 | P7 |
| Monomer (a) | a1-2 | 40 | 40 | 40 | | 40 | | 40 |
| | a1-3 | | | | 40 | | 40 | |
| | a2-2 | 12 | 12 | 12 | | 12 | | 12 |
| | a2-3 | | | | 12 | | 12 | |
| | a2-5 | 5 | 5 | 5 | | 5 | | 5 |
| | a2-6 | | | | 5 | | 5 | |
| | a2-8 | 1 | 1 | 1 | | 1 | | 1 |
| | a2-9 | | | | 1 | | 1 | |
| | a2-11 | 1 | 1 | 1 | | 1 | | 1 |
| | a2-12 | | | | 1 | | 1 | |
| | a2-14 | 1 | 1 | 1 | | 1 | | 1 |
| | a2-15 | | | | 1 | | 1 | |
| Monomer (b1) | Acrylic Acid | 0.2 | 0.1 | 0.5 | | | | 0.075 |
| | Methacrylic Acid | | | | 0.2 | | | 0.075 |
| | Hydroxycarbonylmethyl Acrylate | | | | | 0.2 | | 0.075 |
| | Hydroxycarbonylmethyl Methacrylate | | | | | | 0.2 | 0.075 |
| Monomer (b2) | Methyl Methacrylate | 29.8 | 29.9 | 29.5 | 29.8 | 29.8 | 29.8 | 29.7 |
| | 2-Methoxyethyl Acrylate | 10 | 10 | 10 | 10 | 10 | 10 | 5 |
| | 2-Methoxyethyl Methacrylate | | | | | | | 5 |
| Proportion of Monomer (b1) (mol%) | | 0.39% | 0.20% | 0.97% | 0.34% | 0.20% | 0.20% | 0.43% |
| Total of Monomer Solid Content | | 100 | 100 | 100 | 100 | 100 | 100 | 100 |
| Solvent | Xylene | 50 | 50 | 50 | 50 | 50 | 50 | 50 |
| | Butyl Acetate | 50 | 50 | 50 | 50 | 50 | 50 | 50 |
| Weight-average Molecular Weight (Mw) | | 31200 | 30600 | 31500 | 30700 | 31000 | 31200 | 29100 |
| Non-volatile Matter (%, 125°C, 1h) | | 51.1 | 50.7 | 51.0 | 51.2 | 50.9 | 50.8 | 51.3 |
| Name of Copolymer Solution | | A-1 | A-2 | A-3 | A-4 | A-5 | A-6 | A-7 |

**[Table 4]**

| Table 4 | | Production Example | | | | | | |
|---|---|---|---|---|---|---|---|---|
| | | P8 | P9 | P10 | P11 | P12 | P13 | P14 |
| Monomer (a) | a1-1 | 33 | | | | | | |
| | a1-2 | | | 40 | 40 | | | |
| | a1-3 | | 30 | | | 47 | 47 | 30 |
| | a2-1 | 10 | | | | | | |
| | a2-2 | | | 12 | 12 | | | |
| | a2-3 | | 15 | | | 8 | 8 | 15 |
| | a2-4 | 4 | | | | | | |
| | a2-5 | | 9 | 5 | 5 | | | |
| | a2-6 | | | | | 2 | 2 | 9 |
| | a2-7 | 1 | | | | | | |
| | a2-8 | | 4 | 1 | 1 | | | |
| | a2-9 | | | | | 1 | 1 | 4 |
| | a2-10 | | | 1 | 1 | | | |
| | a2-11 | 1 | 1 | | | | | |
| | a2-12 | | | | | 1 | 1 | 1 |
| | a2-13 | 1 | | | | | | |
| | a2-14 | | 1 | 1 | 1 | | | |
| | a2-15 | | | | | 1 | 1 | 1 |
| Monomer (b1) | Acrylic Acid | 0.15 | | 0.15 | | | | |
| | Methacrylic Acid | | | | | 0.15 | | |
| | Hydroxycarbonylmethyl Acrylate | | | | 0.2 | | | |
| | Hydroxycarbonylmethyl Methacrylate | | 0.2 | | | | 0.2 | 0.2 |
| Monomer (b2) | Methyl Methacrylate | 39.85 | 29.8 | 29.85 | 29.8 | 29.85 | 29.8 | 29.8 |
| | 2-Methoxyethyl Acrylate | 10 | | | 10 | | | 5 |
| | 2-Methoxyethyl Methacrylate | | 10 | 10 | | 10 | 10 | |
| | n-Butyl Acrylate | | | | | | | 5 |
| Proportion of Monomer (b1) (mol%) | | 0.27% | 0.21% | 0.30% | 0.22% | 0.25% | 0.20% | 0.21% |
| Total of Monomer Solid Content | | 100 | 100 | 100 | 100 | 100 | 100 | 100 |
| Solvent | Xylene | 80 | 50 | 50 | 50 | 50 | 50 | 50 |
| | 1-Butanol | 20 | | | | | | |
| | Butyl Acetate | | 50 | 50 | 50 | 50 | 50 | 50 |
| Weight-average Molecular Weight (Mw) | | 32000 | 32100 | 29900 | 30200 | 29400 | 31100 | 30800 |
| Non-volatile Matter (%, 125°C, 1h) | | 51.1 | 51.3 | 51.1 | 51.3 | 50.9 | 51.3 | 51.5 |
| Name of Copolymer Solution | | A-8 | A-9 | A-10 | A-11 | A-12 | A-13 | A-14 |

**[Table 5]**

| Table 5 | | Production Example | | | | | |
|---|---|---|---|---|---|---|---|
| | | P15 | P16 | P17 | P18 | P19 | P20 |
| Monomer (a) | a1-2 | 40 | 15 | 19 | 40 | 40 | |
| | a1-3 | | | | | | 47 |
| | a2-2 | 12 | 7 | 6 | 12 | 12 | |
| | a2-3 | | | | | | 8 |
| | a2-5 | 5 | 4 | 2 | 5 | 5 | |
| | a2-6 | | | | | | 2 |
| | a2-8 | 1 | 2 | 1 | 1 | 1 | |
| | a2-9 | | | | | | 1 |
| | a2-11 | 1 | 1 | 1 | 1 | 1 | |
| | a2-12 | | | | | | 1 |
| | a2-14 | 1 | 1 | 1 | 1 | 1 | |
| | a2-15 | | | | | | 1 |
| Monomer (b1) | Acrylic Acid | | 0.15 | | | 2 | |
| | Methacrylic Acid | | | 0.15 | | | |
| | Hydroxycarbonylmethyl Methacrylate | 0.2 | | | | | |
| Monomer (b2) | Methyl Methacrylate | 29.8 | 34.85 | 29.85 | 30.0 | 28 | 30.0 |
| | 2-Methoxyethyl Acrylate | 5 | 5 | 10 | 10 | 10 | |
| | n-Butyl Acrylate | 5 | | | | | 10 |
| | Triisopropylsilyl Acrylate | | 30 | | | | |
| | Triisopropylsilyl Methacrylate | | | 30 | | | |
| Proportion of Monomer (b1) (mol%) | | 0.22% | 0.31% | 0.26% | 0% | 3.86% | 0% |
| Total of Monomer Solid Content | | 100 | 100 | 100 | 100 | 100 | 100 |
| Solvent | Xylene | 100 | 100 | 100 | 50 | 50 | 50 |
| | Butyl Acetate | | | | 50 | 50 | 50 |
| Weight-average Molecular Weight (Mw) | | 29400 | 29700 | 29500 | 30100 | 29900 | 32100 |
| Non-volatile Matter (%, 125°C, 1h) | | 50.9 | 51.1 | 50.9 | 51.2 | 51.5 | 51.3 |
| Name of Copolymer Solution | | A-15 | A-16 | A-17 | B-1 | B-2 | B-3 |

### <Production Example C1 (Production of Gum Rosin Solution)>

Into a flask equipped with a thermometer, a refluxing condenser, and a stirrer, 300 g of Chinese gum rosin (WW) and 310 g of xylene were added, and the mixture was refluxed and dehydrated under reduced pressure at 70 to 80°C for 1 hour to obtain a xylene solution of gum rosin (brown transparent liquid, solid content: 50%). The non-volatile matter of the resulting solution was 50.3%.

### <Production Example C2 (Production of Gum Rosin Zinc Salt Solution)>

Into a flask equipped with a thermometer, a refluxing condenser, and a stirrer, 240 g of Chinese gum rosin (WW) and 360 g of xylene were added, and 120 g of zinc oxide was further added thereto so that all the resin acids in the rosin form zinc salts, and the mixture was refluxed and dehydrated under reduced pressure at 70 to 80°C for 3 hours. Thereafter, the mixture was cooled and filtered to obtain a xylene solution of gum rosin zinc salt (dark brown transparent liquid, solid content 50%). The non-volatile matter of the resulting solution was 50.2%.

### 2. Examples 1 to 17 and Comparative Examples 1 to 3 (Production of Coating Composition)

The components shown in Tables 6 to 7 were blended in the proportions (mass%) shown in the same tables, and the coating compositions were produced by mixing and dispersing the mixture with glass beads of 1.5 to 2.5 mm in diameter.

### [Table 6]

| Table 6 | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| Copolymer | Copolymer Solution A-1 | | 25 | | | | | | | | | |
| | Copolymer Solution A-2 | | | 25 | | | | | | | | |
| | Copolymer Solution A-3 | | | | 25 | | | | | | | |
| | Copolymer Solution A-4 | | | | | 25 | | | | | | |
| | Copolymer Solution A-5 | | | | | | 25 | | | | | |
| | Copolymer Solution A-6 | | | | | | | 25 | | | | |
| | Copolymer Solution A-7 | | | | | | | | 25 | | | |
| | Copolymer Solution A-8 | | | | | | | | | 25 | | |
| | Copolymer Solution A-9 | | | | | | | | | | 25 | |
| | Copolymer Solution A-10 | | | | | | | | | | | 25 |
| Release Modifier | Gum Rosin Zinc Salt Solution | | | | | | | | 6 | 6 | | 6 |
| | Gum Rosin Solution | | 6 | 6 | 6 | 6 | 6 | 6 | | | 6 | |
| Antifouling Agent | Cuprous Oxide | | 45 | 45 | 45 | 45 | 45 | 45 | 45 | 45 | 45 | 45 |
| | Copper Pyrithione | | 3 | 3 | 3 | 3 | 3 | 3 | 3 | 3 | 3 | 3 |
| Pigment | Red Iron Oxide | | 2 | 2 | 2 | 2 | 2 | 2 | 2 | 2 | 2 | 2 |
| | Talc | | 2 | 2 | 2 | 2 | 2 | 2 | 2 | 2 | 2 | 2 |
| | Zinc Oxide | | 4 | 4 | 4 | 4 | 4 | 4 | 4 | 4 | 4 | 4 |
| | Titanium Oxide | | 1 | 1 | 1 | 1 | 1 | 1 | 1 | 1 | 1 | 1 |
| Other Additives | Disparlon A603-20X | | 3 | 3 | 3 | 3 | 3 | 3 | 3 | 3 | 3 | 3 |
| | Tetraethoxysilane | | 0.5 | 0.5 | 0.5 | 0.5 | 0.5 | 0.5 | 0.5 | 0.5 | 0.5 | 0.5 |
| | Tricresyl Phosphate | | 2 | 2 | 2 | 2 | 2 | 2 | 2 | 2 | 2 | 2 |
| Solvent | Xylene | | 3.5 | 3.5 | 3.5 | 3.5 | 3.5 | 3.5 | 5.5 | 5.5 | 3.5 | 5.5 |
| | 1-Butanol | | | | | | | | 1 | 1 | | 1 |
| | Butyl Acetate | | 3 | 3 | 3 | 3 | 3 | 3 | | | 3 | |
| Total | | | 100 | 100 | 100 | 100 | 100 | 100 | 100 | 100 | 100 | 100 |
| Test Example 1 Rotary Test | Average Amount of Dissolved Coating Film (µm/month) | Initial Stage to 6 Months Later | 3.3 | 2.9 | 3.8 | 2.4 | 3.5 | 2.4 | 3.6 | 4.4 | 2.7 | 3.3 |
| | | 6 Months Later to 12 Months Later | 2.7 | 2.8 | 3.8 | 2.0 | 3.0 | 2.3 | 3.0 | 4.1 | 2.2 | 3.3 |
| | | 12 Months Later to 18 Months Later | 3.8 | 3.0 | 3.6 | 2.5 | 3.7 | 2.7 | 3.8 | 4.5 | 3.0 | 4.3 |
| | | 18 Months Later to 24 Months Later | 3.3 | 3.2 | 3.5 | 2.3 | 3.4 | 2.5 | 3.4 | 4.0 | 2.7 | 5.5 |

### [Table 7]

| Table 7 | | | Example | | | | | | | Comparative Example | | |
|---|---|---|---|---|---|---|---|---|---|---|---|---|
| | | | 11 | 12 | 13 | 14 | 15 | 16 | 17 | 1 | 2 | 3 |
| Copolymer | Copolymer Solution A-11 | | 25 | | | | | | | | | |
| | Copolymer Solution A-12 | | | 25 | | | | | | | | |
| | Copolymer Solution A-13 | | | | 25 | | | | | | | |
| | Copolymer Solution A-14 | | | | | 25 | | | | | | |
| | Copolymer Solution A-15 | | | | | | 25 | | | | | |
| | Copolymer Solution A-16 | | | | | | | 25 | | | | |
| | Copolymer Solution A-17 | | | | | | | | 25 | | | |
| | Copolymer Solution B-1 | | | | | | | | | 25 | | |
| | Copolymer Solution B-2 | | | | | | | | | | 25 | |
| | Copolymer Solution B-3 | | | | | | | | | | | 25 |
| Release Modifier | Gum Rosin Zinc Salt Solution | | 6 | | | 6 | 6 | 6 | | 6 | 6 | |
| | Gum Rosin Solution | | | 6 | 6 | | | | 6 | | | 6 |
| Antifouling Agent | Cuprous Oxide | | 45 | 45 | 45 | 45 | 45 | 45 | 45 | 45 | 45 | 45 |
| | Copper Pyrithione | | 3 | 3 | 3 | 3 | 3 | 3 | 3 | 3 | 3 | 3 |
| Pigment | Red Iron Oxide | | 2 | 2 | 2 | 2 | 2 | 2 | 2 | 2 | 2 | 2 |
| | Talc | | 2 | 2 | 2 | 2 | 2 | 2 | 2 | 2 | 2 | 2 |
| | Zinc Oxide | | 4 | 4 | 4 | 4 | 4 | 4 | 4 | 4 | 4 | 4 |
| | Titanium Oxide | | 1 | 1 | 1 | 1 | 1 | 1 | 1 | 1 | 1 | 1 |
| Other Additives | Disparlon A603-20X | | 3 | 3 | 3 | 3 | 3 | 3 | 3 | 3 | 3 | 3 |
| | Tetraethoxysilane | | 0.5 | 0.5 | 0.5 | 0.5 | 0.5 | 0.5 | 0.5 | 0.5 | 0.5 | 0.5 |
| | Tricresyl Phosphate | | 2 | 2 | 2 | 2 | 2 | 2 | 2 | 2 | 2 | 2 |
| Solvent | Xylene | | 5.5 | 5.5 | 5.5 | 5.5 | 3.5 | 6.5 | 6.5 | 3.5 | 6.5 | 5.5 |
| | 1-Butanol | | 1 | 1 | 1 | 1 | | | | | | 1 |
| | Butyl Acetate | | | | | | 3 | | | 3 | | |
| Total | | | 100 | 100 | 100 | 100 | 100 | 100 | 100 | 100 | 100 | 100 |
| Test Example 1 Rotary Test | Average Amount of Dissolved Coating Film (µm/month) | Initial Stage to 6 Months Later | 3.6 | 2.1 | 2.3 | 3.4 | 4.4 | 3.25 | 5.4 | 0.7 | - | 0.3 |
| | | 6 Months Later to 12 Months Later | 3.6 | 2.0 | 2.0 | 2.0 | 2.1 | 3.25 | 5.5 | 0.5 | - | 0.2 |
| | | 12 Months Later to 18 Months Later | 4.7 | 2.4 | 2.7 | 2.0 | 3.8 | 6.5 | 5.6 | 0.8 | - | 0.3 |
| | | 18 Months Later to 24 Months Later | 6.0 | 2.1 | 2.3 | 2.0 | 4.9 | 8.45 | 6.5 | 0.7 | - | 0.3 |

The details of the components in the table are as follows.

### <Antifouling Agent>

Cuprous oxide: product name "NC-301" (manufactured by Nissin Chemco Ltd.)
Copper pyrithione: product name "Copper Omadine" (manufactured by Lonza Group AG)

### <Release Modifier>

Gum rosin solution: solution produced in Production Example C1 was used.

Gum rosin zinc salt solution: solution produced in Production Example C2 was used.

### <Pigment>

Red iron oxide: product name "BENGARA KINGYOKU" (manufactured by Morishita Red iron oxide Kogyo Co., Ltd.)
Talc: product name "Talc MS" (manufactured by Nippon Talc Co., Ltd.)
Zinc oxide: product name "Zinc Oxide (Type II)" (manufactured by Seido Chemical Industry Co., Ltd.)
Titanium oxide: product name "FR-41" (manufactured by Furukawa Co., Ltd.)

### <Other Additives>

Disparlon A603-20X: amide-based thixotropic agent, product name "Disparlon A603-20X" (manufactured by Kusumoto Chemicals, Ltd.)
Tricresyl phosphate (manufactured by Daihachi Chemical Industry Co., Ltd.)
Tetraethoxysilane: product name "Ethyl Silicate 28" (manufactured by Colcoat Co., Ltd.)

### 3. Test

All the coating compositions of Examples and Comparative Examples were placed into containers within 1 hour after production, sealed, left standing for 30 days in a thermostat set at 50°C (accelerated degradation treatment), and then used. Tests described below were conducted on the coating materials subjected to the above treatment.

### <Test Example 1 (Rotary Test)>

A water tank was provided with, in the center thereof, a rotary drum having a diameter of 515 mm and a height of 440 mm, which was configured to be rotatable by a motor. The tank was also provided with a cooling apparatus for keeping the seawater temperature constant, and an automatic pH controller for keeping the seawater pH constant.

Test plates were prepared in accordance with the following method.

First, an anti-corrosion coating material (an epoxy vinyl A/C) was applied onto a titanium plate (71 × 100 × 0.5 mm) such that the thickness after drying was about 100 µm, and dried to form an anti-corrosion coating film. Thereafter, each of the coating compositions obtained in Examples and Comparative Examples was applied thereon such that the dry film thickness was about 450 µm, and dried at 40°C for 3 days to prepare a test plate.

The test plate thus prepared was fixed to the rotary drum of the rotating apparatus of the above equipment so as to be in contact with seawater, and the rotary drum was rotated at a speed of 20 knots. During the test, the temperature and the pH of the seawater were maintained at 15°C and at 8.0 to 8.2, respectively, and the seawater was replaced every two weeks.

The initial remaining film thickness of each test plate and the remaining film thickness at every six months after the start of the test were measured using a VK-X100 shape measurement laser microscope (manufactured by Keyence Corporation), and the amount of dissolved coating film per month (µm/month) was obtained by calculating the difference, thereby evaluating the dissolution property of the coating film.

The evaluation results are shown in Tables 6 to 7.

Compared to Examples, none of Comparative Examples showed favorable results regarding the maintenance of excellent antifouling performance over a long period of time. To maintain excellent antifouling performance over a long period of time, the amount of dissolved coating film per month is required to be approximately 1.5 to 10 µm/month. However, for Comparative Examples 1 and 3, the amount of dissolved coating film was markedly small. Furthermore, for Comparative Example 2, since the coating material gelled after the accelerated degradation treatment, the relevant tests could not be performed.

## Claims

1. An antifouling coating composition, comprising a copolymer A and an antifouling agent D, wherein:
the copolymer A is a copolymer of a monomer (a) represented by general formula (1) and an ethylenically unsaturated monomer (b) other than the monomer (a);
the monomer (a) comprises a compound represented by general formula (1) in which n is 2 or more;
the monomer (b) comprises a monomer (b1) represented by general formula (2); and
a proportion of the monomer (b1) with respect to a total of the monomer (a) and the monomer (b) is 0.01 to 2 mol%. 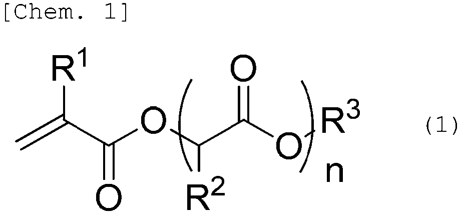 (In general formula (1), R¹ represents hydrogen or a methyl group; R² represents hydrogen, a methyl group or a phenyl group; R³ represents an alkyl group having 1 to 8 carbon atoms optionally substituted with an alkoxy group having 1 to 8 carbon atoms or a phenyl group, or represents a phenyl group; and n represents an integer of 1 to 10.) 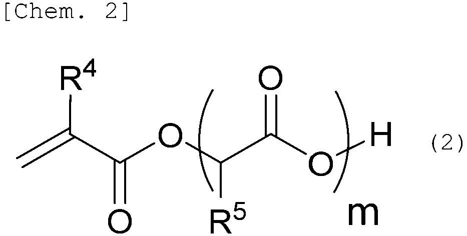 (In general formula (2), R⁴ is hydrogen or a methyl group; R⁵ represents hydrogen, a methyl group, or a phenyl group; and m represents an integer of 0 to 10.)
